# EUROPÄISCHE PATENTSCHRIFT

(11) **EP 2 007 684 B1**
(45) Veröffentlichungstag und Bekanntmachung des Hinweises auf die Patenterteilung: **15.07.2009**
(21) Anmeldenummer: 06742527.2
(22) Anmeldetag: 27.03.2006
(51) Int. Cl.: C02F 1/02, C02F 5/02

(54) **REAKTOR UND VERFAHREN ZUM ENTKALKEN VON WASSER UND GLEICHZEITIGEM ENTFERNEN VON SCHADSTOFFEN**
REACTOR AND METHOD FOR DECALCIFYING WATER AND SIMULTANEOUS REMOVAL OF POLLUTANTS
RÉACTEUR ET PROCÉDÉ DE DÉTARTRAGE DE L'EAU ET D'ÉLIMINATION SIMULTANÉE DE POLLUANTS

(43) Veröffentlichungstag der Anmeldung: 31.12.2008
(73) Patentinhaber: Karimnia, Massaoud, 30159 Hannover (DE)
(72) Erfinder: Karimnia, Massaoud, 30159 Hannover (DE)
(74) Vertreter: Raffay & Fleck
(86) Internationale Anmeldenummer: PCT/EP2006/002773
(87) Internationale Veröffentlichungsnummer: WO 2007/110092

(56) Entgegenhaltungen:
- EP-A- 0 887 315
- EP-A2- 0 992 458
- US-A- 4 948 499
- US-A- 4 957 624

## Beschreibung

Die Erfindung betrifft einen Reaktor und Verfahren zum Entkalken von Wasser und gleichzeitigem Entfernen von Schadstoffen sowie Herabsetzung der Trübung und Desinfektion in einem Reaktor mit Zu- und Auslauf ohne Zusatz von Chemikalien und Filter nach dem Oberbegriff des Anspruchs 1.

Ein derartige Reaktor und Verfahren sind im Prinzip in der DE 10247686 bekannt.

Ferner sind zum Entkalken von Wasser Kalkhydratfällung, Impfgeräte zur Calciumcarbonatbildung und Ionenaustauscher verbreitet. Bei diesen Verfahren handelt es sich um chemische Aufbereitung. Es gibt auch Verfahren, die auf physikalischer Basis arbeiten. Darunter sind Entkalkung durch Veränderung der Kristallstruktur im Magnetfeld, z.B. die DE 43 36 388, Kavitation, Umkehrosmose, Membranfiltration. Es gibt ferner thermische Behandlungsverfahren, z.B. US Patent 5,858,248, die durch hydrodynamische Optimierung des Reaktors zur Erwärmung des Wassers eine Entkalkung und Schadstoff-Eliminierung erzielt.

Bei der aus dem US Patent 4,957,624 bekannten Vorrichtung wird Trinkwasser durch Erhitzen desinfiziert und es findet eine Entfernung von Härtebildnern statt.

Bei dem Patent DE 102 47 686 und der Veröffentlichung WO 2004/035487 A1, werden nicht nur die hydrodynamischen Verhältnisse im Reaktor optimiert, sondern gleichzeitig das Wasser belüftet. Dadurch findet eine effektivere Entkalkung und Schadstoff-Eliminierung auch unterhalb des Siedepunkts des Wassers statt.

Allen genannten Verfahren wird zumeist eine positive Beeinflussung der Kalkabscheidung oder Verhinderung der Kalkbildung in Installationen bescheinigt. Bei den thermischen Verfahren wird auch eine gleichzeitige Kalkreduktion, Herabsetzung der Trübung und Schadstoffeliminierung in Wasser ermöglicht. Nachteilig bei diesen Verfahren ist jedoch, dass entweder die angewandte Tech-nik aufwendig ist und für größere Wassermengen praktikabel und rentabel sein kann oder die Technik nicht genug praktisch und effektiv ist.

Nachteilig beim thermischen Verfahren (siehe US Patent 5,858,248)ist z.B., dass die Turbulenz und Vermischung des Wassers bis zum Siedepunkt des Wassers gering ist, von daher kann mit Hilfe dieses Verfahrens eine gleichzeitige Entkalkung, Schadstoff-Eliminierung und Entfernung von volatilen Schadstoffen erst beim Siedepunkt und lange Weitererwärmung bei dieser Temperatur effektiv durchgeführt werden kann. Insofern kann dieses Verfahren z.B. zur Entkalkung des Wassers für den Einsatz in Warmwasserinstallationen, wo das Wasser bis ca. 70 °c erwärmt wird, wegen hohen Kosten nicht eingesetzt werden. Es arbeitet ferner mit Hilfe einer Filter-Kartusche, die nach Erschöpfung ausgewechselt und extern regeneriert werden muss. Dieses Verfahren eignet sich ferner nur für die Fälle, wo die Herstellung eines sauerstofffreien Wassers erwünscht ist. Ein sauerstofffreies Wasser mag für die Produktion vom Vorteil sein, für die Gesundheit ist es jedoch nicht förderlich. Es ist zuletzt wegen relativ aufwendiger Gestaltung der Anlage zur Behandlung von größeren Mengen vom Wasser in der Industrie geeignet aber weniger für Haushalte und dgl.

Die Nachteile des oben genannten US-Patents ist durch das Patent DE 10247686 zum Teil behoben, jedoch arbeitet diese Technik insofern nicht effektiv, da eine intensive Mikrovermischung des Wassers praktisch nur unterhalb der ersten Platte in unmittelbarer Nähe der Heizquelle und bei weiteren Platten nur an Reaktorwand stattfindet. Dementsprechend benötigt die Behandlung des Wassers längere Zeit. Da ferner die Platten nicht an Reaktorwand befestigt sind und aus dem Reaktor herausgeholt werden können, ist eine zusätzliche Erwärmung und Belüftung zwischen den Platten und innerhalb des Reaktors ausgeschlossen. Zuletzt sind die Platten mit einer oder zwei Stangen an das Deckel befestigt sind, von daher ist eine Nachfüllung des diskontinuierlich arbeitenden Geräte mit Wasser per Hand nur dann möglich, wenn das Deckel zusammen mit Platte(n)aus dem Behandlungsraum abgenommen werden. Das breitet beim heißen Wasser und in größeren Geräten Schwierigkeiten.

Die Techniken, die mit Hilfe von Ionenaustauschern, Aktivkohle, Filtern und dgl. arbeiten, brauchen einerseits unbedingt elektrische Energie und andererseits sind gegenüber den Trübstoffen im Wasser sehr empfindlich und verstopfen sehr schnell, so dass sie in der Regel, insbesondere für den Einsatz im Haushaltsbereich, nur zur Aufbereitung vom klaren Leitungswasser geeignet sind. Andernfalls muss das Wasser extern vorbehandelt werden.

Die Aufgabe der vorliegenden Erfindung besteht nun darin, den eingangs genannten Reaktor und Verfahren derart zu verbessern, dass sie auch ohne Einsatz von Chemikalien, Filter die geschilderten Probleme vermeiden und ohne großen apparativen Aufwand und Wartung Wasser entkalken, gleichzeitig Schadstoffe aus dem Wasser eliminieren, die Trübung des Wassers herabzusetzen und die Desinfektion bewirken. Ein weiteres Ziel ist, dass Kalkablagerungen sowohl bei kontinuierlich, als auch dis- und semikontinuierlich arbeitenden Reaktorvorrichtungen von den Wärme-übertragungsflächen lösen und nicht zu einer permanenten Verkrustung führen. Der erfindungsgemäße Reaktor sollte möglichst in sämtlichen Größen ab 0,5 Liter herstellbar sein, und eine variable Verfahrensführung ermöglichen.

Erfindungsgemäß werden die Aufgabe und das Ziel in vorrichtungsgemäßer Weise durch den in Anspruch 1 gekennzeichneten Reaktor bzw. in ablaufgemäßer Hinsicht durch das Verfahren gemäß Anspruch 6 gelöst.

Die Strömung bei Erwärmung von Wasser ist mehr oder weniger laminar und findet mehr oder weniger im inneren Bereich des Wassers statt. Durch die fest montierten und mit Bohrungen versehenen Platten in den Reaktor mit Luft-Begasung wird erfindungsgemäß zum einen die laminare Strömung in eine turbulente Strömung umgewandelt. Dadurch entsteht eine intensive Mikrovermischung des Wassers in allen Bereichen des Reaktors statt. Daneben wird diese Turbulenz möglichst in die Nähe der Phasengrenzfläche(Reaktorwand)geleitet, um so den Stoffaustausch dort zu vergrößern und die heterogene Kristallkeimbildung zu beschleunigen. Die heterogene und sekundäre Keimbildung laufen bei niedrigerer Übersättigung ab. Zum anderen werden durch die fest montierten Platten und ihre spezielle Anordnung sequentielle Bereiche im Reaktor hergestellt, wo die Temperatur des Wassers in der Nähe der Wärmequelle schneller ansteigt als in weiteren Bereichen. In diesem Fall betragen die Temperaturunterschiede zwischen einzelnen Bereichen um mehrere 10 °C. Folglich findet dort eine zeitlich schnellere Keimbildung und Kristallwachstum statt. Durch diese Keime und Kristalle, die später zum Teil in anderen Bereichen eindringen, geschieht eine automatische Animpfung und sekundäre Kristallisation in übrigen Bereichen, die zusammen mit heterogenen Keim- und Kristallbildung insgesamt zu einer schnelleren Prozessablauf führen.

Bei der Kristallisation von Härtebildnern im Wasser handelt es sich um die Fällungskristallisation. Bekanntlich setzt die Kristallisation allgemein durch Animpfung durch artverwandte Kristalle schneller ein. Bei der Fällungskristallisation speziell findet die Kristallisation erst bei höherer Übersättigung ein, und dabei spielt die heterogene eine größere Rolle als die homogene Keimbildung. Die Keimbildung und das Kristallwachstum werden darüber hinaus durch das geeignete Material mit großer Oberflächenenergie zwischen der Reaktorwand und Wasser gefördert. Es wird berichtet, dass auch Gasblasen als fremde Partikel die heterogene Keimbildung unterstützen.

Einen positiven Effekt auf die Keimbildung bei Fällungskristallisation hat ebenfalls nicht nur die Makro-, sondern auch die Mikrovermischung der Reaktionspartner. Bei der Fällung von Carbonaten im Wasser spielt daneben eine schnelle Strippung des Kohlendioxids aus dem Wasser eine Rolle. Die Begasung und Herstellung von intensiven Vermischungszonen unterhalb der Platten mit gleichzeitiger Desorption des Kohlendioxids bewirken, dass die Kristallisation insgesamt mit erheblich geringerer Übersättigung als sonst und weit unterhalb des Siedepunktes anfängt.

Beim Verfahren nach dem Patent DE 10247686 findet eine intensive Mikrovermischung praktisch nur unterhalb der ersten Platte statt und beim Verfahren nach US Patent-Nr.5,858,248 wird eine schnelle Strippung des Kohlendioxids erst beim Siedepunkt ermöglicht.

Eine Strippung des Kohlendioxids und Kristallisation bei geringerer Übersättigung bedeutet ferner, dass dadurch mehr Kohlendioxid und folglich Carbonate aus dem Wasser entfernt wird. Dieser Effekt hat ebenfalls zur Folge, dass der pH-Wert des Wassers mit Hilfe dieses Verfahrens höher ansteigt als bei der Entkalkung in herkömmlichen Reaktoren. Höherer pH-Wert führt zu einer verstärkten Carbonatfällung und diese beide führen letztlich gemeinsam zu einer besseren physikalischen und chemischen Ausfällung von Trübstoffen, Phosphaten und Metall- sowie Schwermetallhydroxiden.

Aus diesen Gründen eignet sich das Verfahren neben der Behandlung vom Leitungswasser, sondern auch zur Behandlung von Oberflächen- und Grundwasser mit hohem Anteil an Trübstoffe sowie manche Abwässer.

Bekanntlich wird die Übersättigung von Härtebildnern an wärmeren Kontaktflächen(Heizfläche und Reaktorwand)zur Keimbildung eher erreicht als im Wasser und die Kristallisation dieser Salze findet in erster Linie auf diese Flächen. Die Umlenkung der Wasserströmung an die Nähe der Reaktorwand bewirkt zwar eine Verkleinerung der laminaren Schicht in diesem Bereich und begünstigt den Stoff- und Energieaustausch, es zeigt sich jedoch in der Praxis, dass neben einer Mikrovermischung an die Reaktorwände diese auch in weiteren Bereichen des Wassers eine bedeutende Rolle bei der Kristallisation spielt. Durch eine optimierte Anordnung der Platten und die Möglichkeit einer schnelleren sequentiellen Erwärmung sowie Animpfung von weiteren Bereichen zusammen schafft Voraussetzungen für eine bessere Nutzung des Reaktors und der zuzuführenden Energie.

Bei den Rektoren mit beweglichen Platten oder Kartuschen ist es nur möglich, durch eine zusätzliche seitliche Erwärmung des Reaktors die Kristallisation in weiteren Bereichen weiter zu fördern. Dabei ist jedoch der Wärmeverlust im Vergleich zu der direkten Erwärmung im Wasser - z.B. durch elektrische Heizspirale - sehr groß. Die Möglichkeit einer direkten Erwärmung ist im Reaktor mit fest montierten Platten gegeben. Das Gleiche gilt für Zufuhr von Luft.

Je nach den gewünschten Zielen bei der Behandlung wird das Wasser nicht nur erhitzt und belüftet, sondern nötigenfalls entweder dessen Temperatur durch geringere Wärmezufuhr als vorher in diesem Temperaturbereich konstant gehalten und/oder die Luft-Begasung länger fortgesetzt.

Durch die Möglichkeit einer erfindungsgemäßen sequentiellen Erwärmung und früheres Sieden des Wassers in unmittelbarer Nähe zur Heizquelle entsteht in diesem Bereich Wasserdampf, der durch die Bohrungen am Rande der befestigten Platten in Form von kleinen Blasen aufsteigt und ebenfalls einer Mikrovermischung des Wassers in oberen Bereichen beiträgt. Mit anderen Worten, wenn aus bestimmten Gründen eine Belüftung nicht möglich oder erwünscht wäre, kann mit geringer Verzögerung trotzdem eine beachtliche Wirkung im Reaktor erzielt werden. Diese Möglichkeit ist bei den oben genannten thermischen Verfahren nicht optimal.

Bei den oben genannten thermischen Verfahren treten ebenfalls eine gewisse sequentielle Erwärmung und Dampfbildung in unmittelbarer Nähe der Heizquelle auf; Dampf und Luft steigen jedoch in Form von großen Blasen, die nicht wie kleine Blasen effektiv zur Durchmischung des Wassers und Stoffaustauschs führen, wenn auch beim Verfahren in dem Patent DE 10247686 im Reaktor Luftverteiler eingesetzt sind. Die Gründe liegen einmal daran, dass die Oberflächenspannung des Wassers mit steigender Temperatur abnimmt und dadurch die Blasen weitgehend infolge von Koaleszens schnell große Blasen bilden. Die Platten tragen ferner dazu bei, dass die kleinen Luftblasen zusammenstoßen und größere Blasen bilden.

Dieses Problem wird in dem erfindungsgemäßen Reaktor durch fest montierten Platten derart gelöst, dass die großen Blasen beim Durchgang durch die kleinen Bohrungen am Rande der Platten in kleine homogene Blasen zerkleinert werden und fein verteilt in der Nähe der Reaktorwand aufsteigen. Die darüber montierte Platte besitzt aber nur eine große Bohrung in der Mitte, am Rande jedoch keine Bohrungen. Dadurch werden die Blasen beim Aufstieg in der Mitte dieser Stufe gelenkt. Dadurch findet eine intensive Durchmischung auch in diesem Bereich statt.

Was das Reaktormaterial bezüglich der Fällungskristallisation anbelangt, wird die Keimbildungsarbeit an Flächen mit guter Benetzbarkeit durch Wasser und höhere Oberflächenenergie der Kontaktfläche reduziert.

Eine weitere Funktion der fest montierten Platten und die nicht an der Reaktorwand befestigte Platte(n) besteht darin, dass die Kalkablagerungen durch intensives Vermischen und evtl. Sieden des Wassers keine festhaftend wachsende Kristalle, sondern lose(amorphe)und Schichtkristalle bilden, die eine geringere Haftfestigkeit besitzen. Bei turbulenter Strömung treten Spannungen auf, die von Zeit zu Zeit die Kristalle ablösen und ins Wasser abgeben. Dadurch wird eine Verkalkung des Reaktors vermieden und Wärmedurchgang durch Verkalkung der Heizfläche nicht reduziert.

Zuletzt wirkt eine Erwärmung des Wassers oberhalb von 70° C als eine sichere Methode zur Entkeimung des Wassers und Abtötung der Legionellen im Wasser.

Bei der erfindungsgemäßen einfachsten Ausführung dieser Vorrichtung handelt es sich um eine diskontinuierlich bzw. semikontinuierlich betriebene Vorrichtung bzw. Reaktor, der mit Hilfe einer externen Energiequelle von unten erwärmt und belüftet wird. In dem Behandlungsraum dieses Reaktors sind zwei Platten mit einem Abstand vom Boden zur sequentiellen Erwärmung des Wassers und Lenkung der Strömung sowie Verstärkung von Turbulenz an Reaktorwand und Mikrovermischung innerhalb des Wassers befestigt. Die Platten sind horizontal angeordnet. Die untere Platte hat am Rande durchlaufende kleine Bohrungen und in der Mitte eine große Bohrung. Die zweite Platte hat nur eine große Bohrung. Zunächst wird der Reaktor von oben mit Wasser aufgefüllt. Danach wird eine Vorrichtung bestehend aus einer Platte und einer zylindrischen bzw. den konischen Metall-Teilen, die an einer Halterung zentrisch befestigt sind, so in die Bohrungen eingeführt, dass die unterste mittlere Bohrung ganz und die obere Bohrung mit einem Abstand geschlossen wird.

Die Befestigung der Platten in den Reaktor kann auch dadurch stattfinden, dass sie vorher mit Hilfe von zwei oder drei Stangen miteinander verbunden werden und dann zusammen in den Reaktor eingedruckt werden, damit sie nötigenfalls herausgezogen werden können.

Die bewegliche oberste Platte trägt einerseits zur Mikrovermischung des Wassers oberhalb der befestigten Platten und andererseits zur Dämpfung des Siedevorgangs in diesem Bereich. Beim Ausgießen des Wassers nach der Behandlung bleiben die Rückstände auf die Platten und den Boden des Reaktors zurück. Die Entfernung der Rückstände geschieht nach einer mehrmaligen Wasserbehandlung durch Umkippen des Behälters. Dazu wird die Vorrichtung aus der Mitte des Reaktors herausgenommen. Somit bedarf der erfindungsgemäße Reaktor bis auf einfache Entfernung der Rückstände keiner weiteren Wartung oder dgl.

Um das Volumen des restlich im Behandlungsraum befindlichen Wasser zu verringern, ist der Behandlungsraum bei dis- bzw. semikontinuierlichem Betrieb unten etwas verengt.

Während der Behandlung schwimmen Sedimente im Wasser. Sollte das Wasser auch während der Behandlung bzw. des Siedens aus dem Reaktor entnommen werden können, wird ein an den Auslaufhahn angeschlossenes Sieb ihren Austritt unterbinden.

Das so behandelte Wasser kann je nach Aufgabenstellung zur Entkalkung und Reduzierung der Schadstoffe sofort nach der Behandlung aus dem Behandlungsraum entnommen werden oder die Entnahme erst nach einer Abkühlung im Behandlungsraum erforderlich sein, da häufig Verbindungen bei kleinen Temperaturen eine geringere Löslichkeit haben. Weitere Vorteile und Merkmale gehen aus den Unteransprüchen hervor, die auch gemeinsam mit dem Hauptanspruch von erfinderischer Bedeutung sein können. Im Folgenden werden bevorzugte Ausführungsbeispiele der Erfindung zum besseren Verständnis derselben anhand der Zeichnung näher erläutert. Es dürfte einleuchten, dass die Erfindung auf die gezeigten Beispiele nicht beschränkt ist.

Es zeigt:

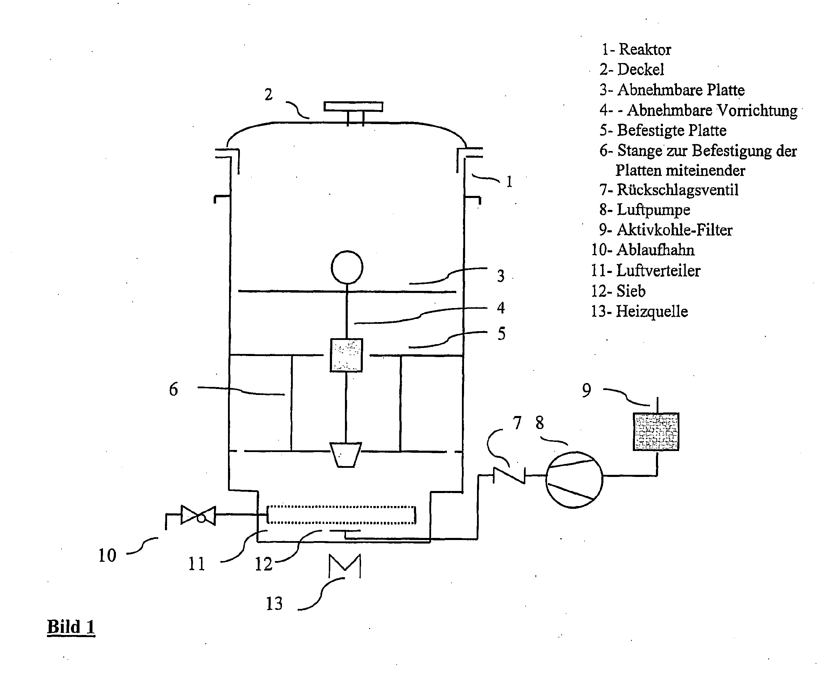

- Bild 1: eine schematische Querschnittsansicht durch einen erfin- dungsgemäßen Reaktor in seiner einfachsten Ausführungs- form, die befestigten Platten und eine abnehmbare Vor- richtung sowie eine Begasungsvorrichtung aufweist (der Reaktor im Bild 1 ist bevorzugt zur diskontinuierlichen Behandlung vom Wasser von 2 bis etwa 50 Liter geeignet);

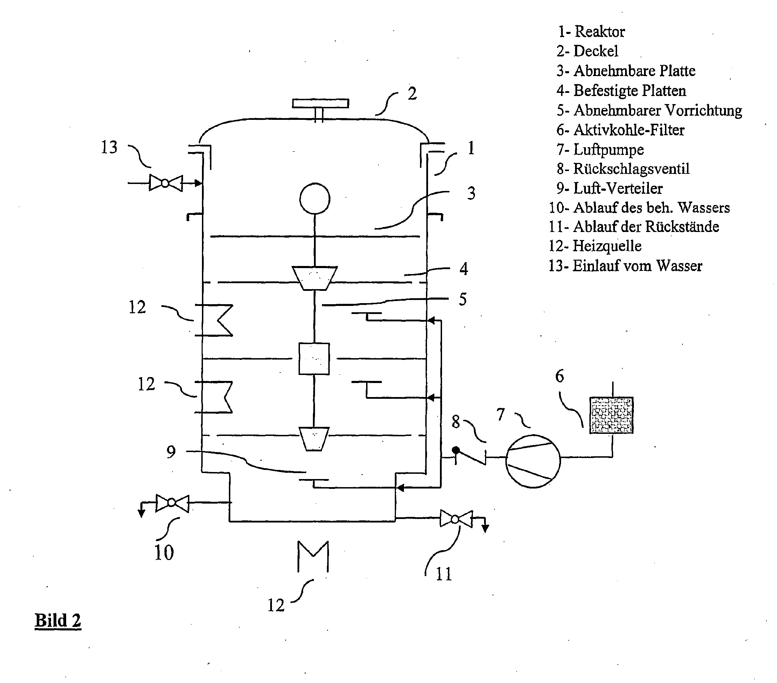

- Bild 2: eine schematische Darstellung einer noch weiteren Ausfüh- rungsform eines erfindungsgemäßen Reaktors zur dis- bzw. semi-kontinuierlicher Betriebsführung mit zusätzlicher Erwärmung und Belüftung in verschiedene Bereiche sowie ein weiterer Ablasshahn zur Entfernung von Rückständen (der Reaktor im Bild 2 ist bevorzugt zur diskontinuierli- chen bzw. semi-kontinuierlichen Behandlung vom Wasser von 10 Liter bis mehrere Kubikmeter geeignet);

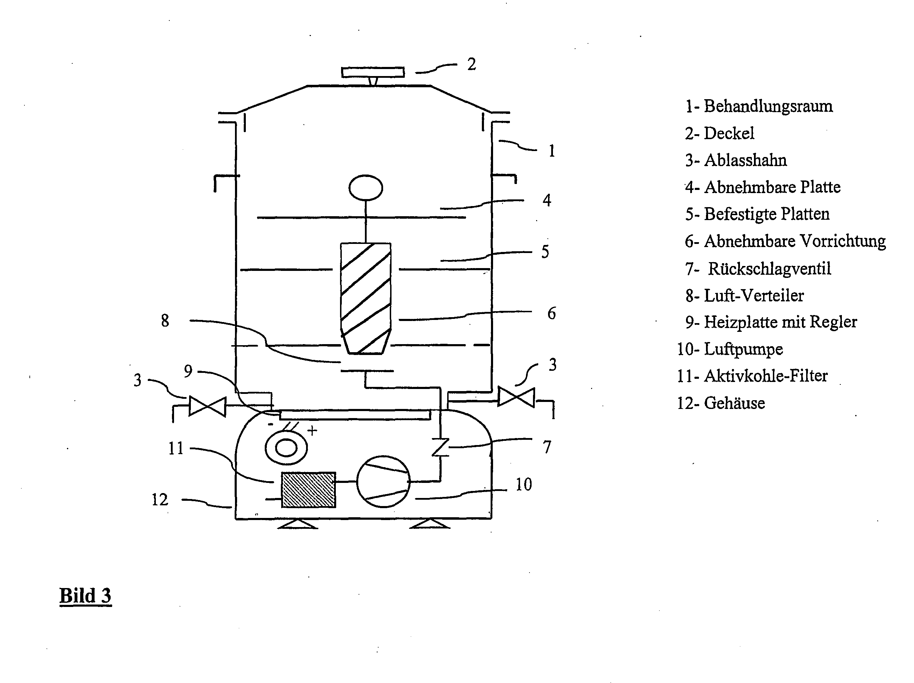

- Bild 3: eine schematische Darstellung einer noch weiteren Ausfüh- rungsform eines erfindungsgemäßen Reaktors zur dis- bzw. semi-kontinuierlicher Betriebsführung mit integrierter Erwärmung und Belüftung sowie ein weiterer Ablasshahn zur Entfernung von Rückständen (der Reaktor im Bild 3 ist be- vorzugt zur diskontinuierlichen bzw. semi- kontinuierlichen Behandlung vom Wasser von 2 bis etwa 100 Liter geeignet);

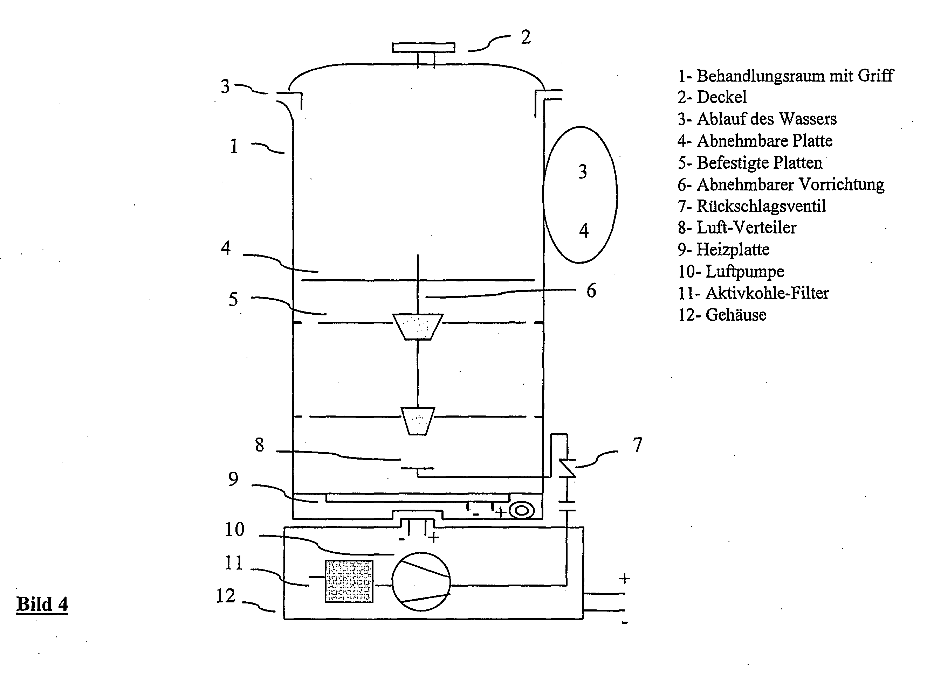

- Bild 4: eine schematische Darstellung einer weiteren Ausfüh- rungsform des erfindungsgemäßen Reaktors ohne Ablass- hahn, mit integrierter Erwärmung, Belüftung und abnehm- barem Behälter sowie trennbarer Reaktor und Belüftungs- rohr, in dem das Wasser nach der Behandlung von oben ausgegossen wird, wozu alle platten im Ablaufbereich zu- sätzliche Bohrungen haben (der Reaktor im Bild 4 ist be- vorzugt zur diskontinuierlichen Behandlung vom Wasser von 1 bis etwa 3 Liter geeignet);

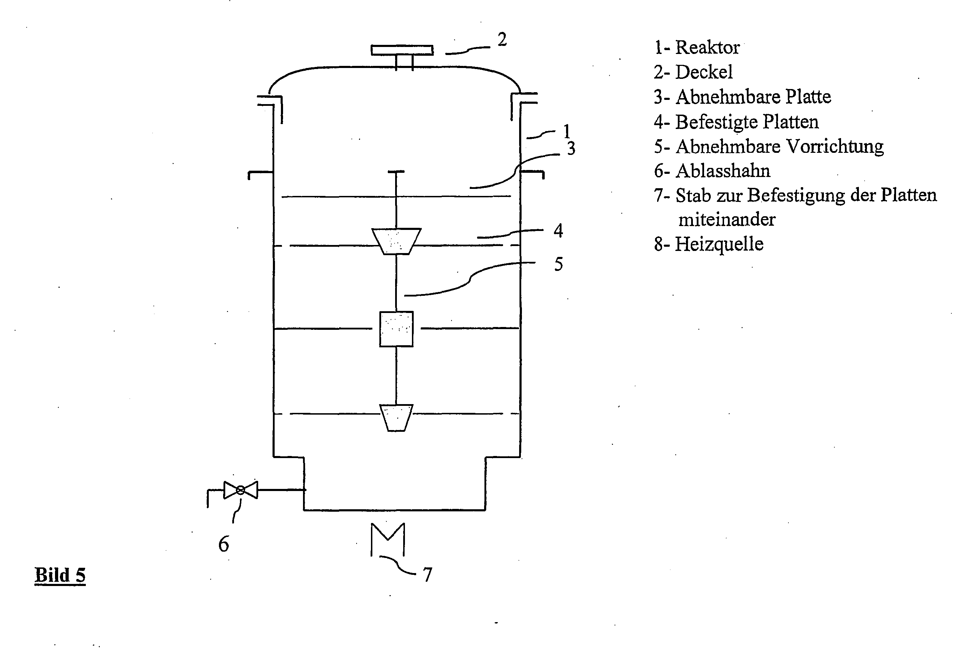

- Bild 5: eine weitere Ausführungsform des erfindungsgemäßen Reak- tors ohne Belüftung mit Ablasshahn (der Reaktor im Bild 5 ist bevorzugt zur diskontinuierlichen Behandlung vom Was- ser von 2 bis etwa 20 Liter geeignet);

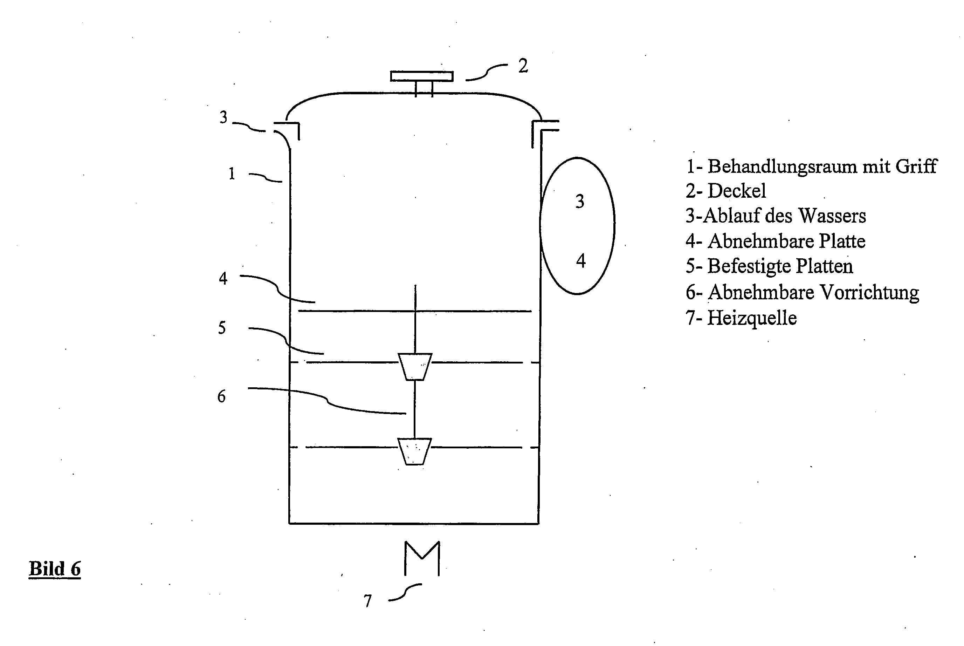

- Bild 6: eine weitere Ausführungsform des erfindungsgemäßen Reak- tors ohne Belüftung und ohne Ablasshahn (der Reaktor im Bild 6 ist bevorzugt zur diskontinuierlichen Behandlung vom Wasser von 0,5 bis etwa 3 Liter geeignet);

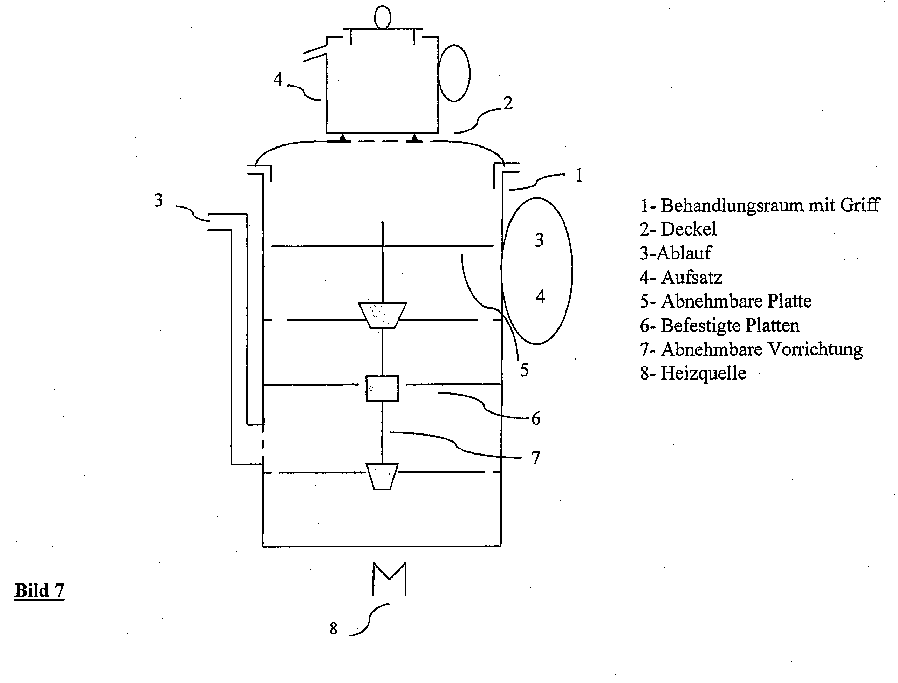

- Bild 7: eine weitere Ausführung des erfindungsgemäßen Reaktors mit einem Ablassrohr, ohne Belüftung zur Behandlung des Wassers und zum Warmhalten von heißen Getränken (der Re- aktor im Bild 7 ist bevorzugt zur diskontinuierlichen Be- handlung vom Wasser von 1 bis etwa 2,5 Liter geeignet);

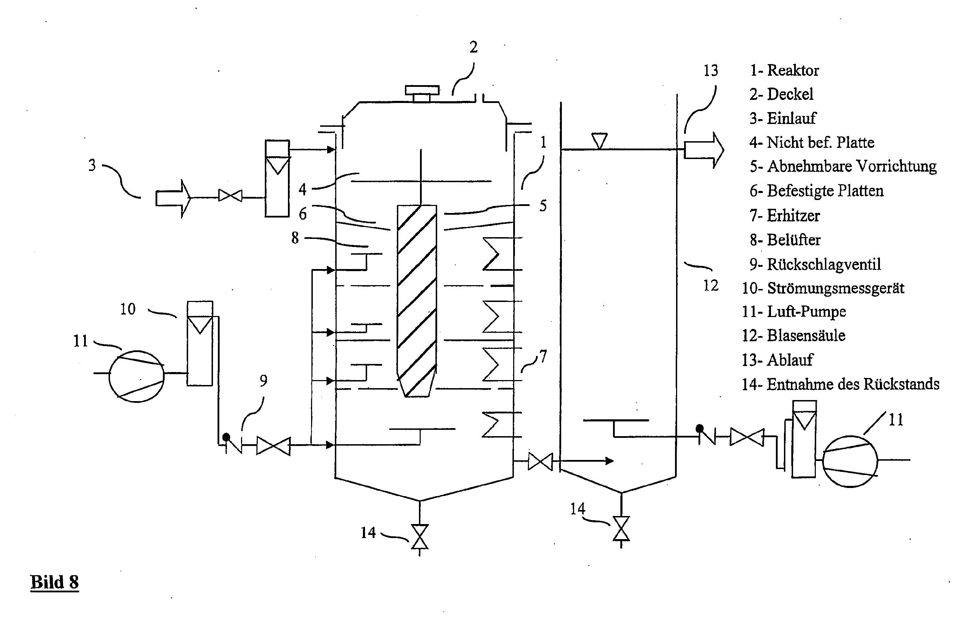

- Bild 8: eine schematische Darstellung einer noch weiteren Ausfüh- rungsform eines erfindungsgemäßen Reaktors zur kontinu- ierlicher Betriebsführung mit mehreren befestigten Plat- ten, Zusätzliche Erwärmung und Belüftung in verschiedene Segmente und einer nachgeschalteten Blasensäule (der Re- aktor im Bild 8 ist zur kontinuierlichen Behandlung vom Wasser von 10 Liter/h bis mehreren Kubikmeter/h geeig- net).

Bild 1 stellt die einfachste Ausführungsform des Reaktors dar, der aus folgenden Teilen besteht: der Behandlungsraum 1, Deckel 2, die nicht befestigte Platte 3,die mit der abnehmbare Vorrichtung 4 verbunden ist, die befestigten Platten 5, Stangen zur Befestigung der Platten 6, das Rückschlagsventil 7, die Belüftungspumpe 8, der Aktivkohle-Filter 9, der Ablasshahn 10, der Sieb 11, Luftverteiler 12, der mit Hilfe von externen Energiequellen 13 von unten beheizt werden kann und per Hand mit Wasser aufgefühlt werden kann.

Im Bild 2 ist ein weiterer Reaktor zur dis- bzw. Semi- kontinuierlichen Betriebsführung dargestellt, der über ein zweites Ventil von oben mit Wasser beaufschlagt, auf jedes Segment zusätzlich erwärmt und belüftet werden kann.

Im Bild 3 u. 4 sind zwei weitere Reaktoren mit eigener elektrischer Heizung und elektrischer Regler 9 und einem Gehäuse als Ständer dargestellt, dass der Reaktor entweder auf dem Ständer fest montiert ist und durch Erhöhung des Abstands des Behandlungsraums vom Boden ein Ausgießen des Wassers durch den Auslauf erleichtert ist oder vom Ständer abgenommen werden kann Im Bild 3 sind die Belüftungspumpe 10, Aktivkohle-Filter 11, Heizung und Regler 9 alle in Gehäuse 12 unter dem Behandlungsraum integriert.

Im Bild 4 sind die Heizplatte und Regler 9 unter dem abnehmbaren Reaktor, die Belüftungspumpe 10 und Aktivkohle-Filter 11 in Gehäuse 12 unter dem Behandlungsraum integriert. Bei diesem Reaktor kann das behandelte Wasser durch Umkippen des Reaktors von oben ausgegossen werden kann.

Die Maßstäbe für größere Reaktoren zur dis- und semikontinuierlichen Betriebsführung können unter Einhaltung der o.a. Optimierungen beliebig vergrößert, zusätzlich auch in jede Stufe erwärmt und belüftet sowie die Zahl der Platten erhöht werden. Zur Einsparung von Energie kann weiterhin der Behandlungsraum mit Isoliermaterial versehen werden und dadurch der Wärmeverlust verringert werden.

Im Bild 5,6 und 7 sind die Reaktoren in Bild 1, Bild 3 und Bild 4 ohne Belüftung dargestellt, die extern erhitzt werden können. Diese können dort eingesetzt werden, wo kein elektrischer Strom zum Betreiben der Luft-Pumpe vorhanden oder unerwünscht ist. Es kann nötigenfalls zur Behandlung des Wassers beim Siedepunkt einige Zeit zusätzliche Wärme-Energie zugeführt werden.

Für eine kontinuierliche Betriebsführung der erfindungsgemäßen Vorrichtung besteht die Anlage aus einem Reaktor und einer Blasensäule, wo das Wasser nach Behandlung im ersten Reaktor hier nur weiter belüftet wird (Bild 8). Der Reaktor ist im Inneren mit mehreren Platten horizontal ausgestattet und kann doppelwandig sein und zusätzlich auf jede Stufe beheizt und belüftet werden. In diesem Reaktor wird das Wasser bis auf gewünschte Temperatur erhitzt und gleichzeitig belüftet. Danach gelangt das Wasser in eine Blasensäule, wo das Wasser nur belüftet wird. Wenn aus irgendeinem Grund der Einsatz von Blasensäule nicht möglich ist, kann der Prozess ohne diese aber mit etwas längerer Verweilzeit im ersten Reaktor durchgeführt werden.

Weitere Einsatzgebiete des erfindungsgemäßen Reaktors und Verfahrens ohne oder mit Einsatz von Chemikalien sind z.B. Trinkwasser-, Oberflächenwasser- und Abwasseraufbereitung sowie Schlammbehandlung im Allgemeinen.

Falls also eine thermische Behandlung des Wassers zur Eliminierung von Schadstoffen im erfindungsgemäß entwickelten Reaktor nicht allein ausreicht, können je nach Bedarf dem Wasser Chemikalien und Gase (wie z.B. reiner Sauerstoff oder Ozon) zugesetzt werden.

Es ist ebenfalls möglich, auf jede Stufe des Behandlungsraums einen fest montierten UV-Strahler anzubringen, um eine Oxidation von weiteren Schadstoffen zu ermöglichen bzw. zu beschleunigen.

Im Grunde handelt es sich beim erfindungsgemäßen thermischen Reaktor um einen Hochleistungsreaktor für chemische Reaktionsführung, die auch in anderen Bereichen der chemischen Reaktionsführung Verwendung finden kann.

Das Verfahren kann zur Einsparung von Chemikalien als eine sinnvolle Vorstufe zur Mikro-, Ultra-, Nanofiltration und insbesondere Umkehrosmose eingesetzt werden.

Die Beheizung des Behandlungsraums kann nicht nur elektrisch, sondern auch durch entsprechende Änderung mit Hilfe von fossilen- oder erneuerbaren Energiequellen bewerkstelligt werden. Insofern ist der erfindungsgemäße Reaktor zur Behandlung vom Wasser im Allgemeinen für dezentrale Trinkwasseraufbereitung beim Verbrauchern und vor allem in Regionen ohne elektrischen Energieanschluss und Katastrophengebiete einsetzbar. Des Weiteren können noch folgende Merkmale allein oder auch gemeinsam für die Erfindung bedeutsam sein:
- dass zur Erwärmung des Wassers mit integriertem Beheizungsaggregat fossile Brennstoffe und erneuerbare Energien mit entsprechender Änderung des Heizaggregats verwendet werden,
- dass zum Rühren, Begasen, Strippen und chemische Oxidation eine Gaspumpe mit regelbarer Durchflussmenge eingesetzt wird,
- dass die Begasungen und Beheizung in verschiedene Bereiche in den Reaktor stattfinden kann,
- dass in der dis-, semi- und kontinuierlich betriebenen Anlage die Platten an Reaktorwänden befestigt sind,
- dass die befestigten Platten eine große Bohrung besitzen und am Rande kleine Bohrungen haben können,
- dass eine abnehmbare Vorrichtung ohne Platte bzw. mit einer oder mehreren Platte(n) in großen Bohrungen platziert wird, um die Öffnungen zu verengen bzw. zu schließen
- dass der Reaktor und die Platten abweichende Form von rund und zylindrisch besitzen,
- dass die Platten konisch geformt sind,
- dass in dis-, semi- und kontinuierlich betriebenem Reaktor im tiefsten Punkt desselben ein zweites Ablassventil für Schlammentnahme vorgesehen ist,
- dass zur Einstellung des Kalk-Kohlensäure-Gleichgewichtes für Verwendung in Hausinstallationen ab 20 °C und der chemischen Fällung ab 30 °C gearbeitet wird,
- dass der Reaktor mit Hilfe von Isoliermaterialien Wärme isoliert ist.

## Patentansprüche

1. Reaktor zum Entkalken von Wasser und gleichzeitigem Entfernen von Schadstoffen, Herabsetzung der Trübung sowie und Desinfektion,
- umfassend einen Behandlungsraum mit Zulauf für das zu behandelnde Wasser und einen Auslauf für das behandelte Wasser sowie ggf. einen zusätzlichen Auslauf zur Entfernung von Sedimenten,
- mit einer oder mehreren direkten und/oder indirekten Heizvorrichtungen für das Wasser,
- mehrere horizontal verlaufende abnehmbare und befestigte Platten zur Umlenkung der Wasserströmung, die im Reaktor beabstandet von seinem Boden und ggf. von seiner Seitenwand befestigt sind,
**dadurch gekennzeichnet, dass**
die befestigten Platten jeweils in ihrer Mitte eine Bohrung aufweisen, durch die eine Vorrichtung zum Öffnen und Verschließen der Bohrungen mittels konus- und/oder zylinderförmiger Verschlüsse verläuft, wobei das obere Ende der Vorrichtung ohne Platte bzw. mit einer oder mehreren nichtbefestigten Platte(n) verbunden ist und eine Halterung aufweist, und wobei eine oder mehrere der befestigten Platten im Randbereich umlaufende Öffnungen besitzen, und wobei die direkten Heizvorrichtungen in den voneinander beabstandeten Abschnitten des Reaktors angeordnet sind, und wobei der Einund/oder Auslauf für das Wasser im oberen und/oder unteren Bereich des Reaktor angeordnet ist, und dass
über einer Platte mit kleinen Bohrungen am Rand eine Platte mit nur einer großen Bohrung in der Mitte angebracht ist.

2. Reaktor nach Anspruch 1, **dadurch gekennzeichnet, dass** er aus rostfreiem Edelstahl, sonstigen Legierungen oder thermisch resistentem Material besteht.

3. Reaktor nach Anspruch 1 und 2, **dadurch gekennzeichnet, dass** die Platten konisch geformt sind.

4. Reaktor nach Anspruch 1 bis 3, **dadurch gekennzeichnet, dass** die Platten vorher mit Hilfe von zwei oder drei Stangen miteinander gebunden und dann zusammen in den Reaktor eingedruckt bzw. herausgezogen werden können.

5. Reaktor nach Anspruch 1 bis 4, **dadurch gekennzeichnet, dass** ein Sieb im Reaktor den Austritt der Sedimente während der Wasserbehandlung unterbindet.

6. Verfahren zum Entkalken von Wasser und gleichzeitigem Entfernen von Schadstoffen und Desinfektion in einem Reaktor nach Anspruch 1 mit Ein- und Auslauf unter
a) Erwärmung des Wassers, wodurch die Löslichkeit des CO₂ im Wasser verringert und die Desorption des CO₂ eingeleitet wird, die durch die bewirkte pH-Erhöhung ebenfalls gesteigert wird (2 HCO₃⁻ → CO₂ + CO3²⁻+ H₂O),
b) Vorsehen und Anordnung von einer oder mehreren abnehmbaren und befestigten Platten im Reaktionsraum mit intensiver Mikrovermischung innerhalb des Wassers und and der Reaktorwand und der Umlenkung der Wasserströmung an die Reaktorwand und weitere Bereiche, sowie zur verstärkten Kristallkeimbildung und -wachstum an der Wand und wobei das erwärmte Wasser nötigenfalls auf erhöhter Temperatur gehalten wird, und das der entstandene Kalk und die Verkrustungen, die sich unter der bzw. den Platten und auf den Heizflächen bzw. Reaktorwänden festgesetzt haben durch Verwirbelung abgelöst und durch das Wasser ausgetragen werden, **dadurch gekennzeichnet, dass** die Erhitzung des Wassers in voneinander beabstandeten Abschnitten des Reaktors zeitlich getrennt durchgeführt wird und die Luft- sowie Dampfblasen zerkleinert werden, um einerseits einen intensiveren Stoffaustausch zu ermöglichen und andererseits eine fraktionierte Kristallisation gekoppelt mit Animpfung und sekundäre Kristallisation in weniger erhitzten Bereiche herbeizuführen, wobei der Reaktor in einer kontinuierlichen, semi-kontinuierlichen oder diskontinuierlichen Arbeitsweise betrieben wird, und wobei das Wasser maximal bis zum Siedepunkt beim normalen, geringerem oder erhöhten Druck erhitzt wird.

## Claims

1. A reactor for water deliming and simultaneous discharge of harmful substances, reduced cloudiness and disinfection,
- including a treatment room with an inlet section for the water to be treated and an outlet section for the treated water as well as an additional outlet for discharging sediments,
- fitted with one or several direct and/or indirect heating devices, intended for the water to be treated,
- several removable and fixed plates for diverting the water flow, arranged horizontally, at a distance from the bottom and if required from the lateral wall of the reactor, **characterised in that**
the fixed plates always have a bore in their middle, through which a system for opening and closing the bores runs, with conical or cylinder-shaped closing means, wherein the upper end of the system is connected without any plates or with one or several non-fixed plates and comprises a rest, and wherein one or several of the fixed plates have peripheral openings along the contour, and wherein the direct heating devices are arranged in spaced apart sections of the reactor, and wherein the water inlet and/or outlet are provided in the upper and/or lower area of the reactor, and **in that** a plate is provided with only one large bore in the middle over a plate with smaller bores at the periphery.

2. A reactor according to claim 1, **characterised in that** it is composed of stainless steel, various alloys or heat-resistant material.

3. A reactor according to claim 1 and 2, **characterised in that** the plates are conical in shape.

4. A reactor according to claim 1 to 3, **characterised in that** the plates are connected first of all with two or three rods and can be inserted into or removed together from the reactor.

5. A reactor according to claim 1 to 4, **characterised in that** a sieve is provided under the outlet section of the sediments in the reactor during water treatment.

6. A method for water deliming and simultaneous discharge of harmful substances and disinfection in a reactor according to claim 1 with inlet and outlet including the following steps:
a) heating the water, whereby the solubility of the CO2 in water is reduced and the desorption of the CO2 is initiated, thereby causing further rise of the already increased pH (2 HCO3₋ -> C02 + C0₃²⁻+ H₂0),
b) provision and arrangement of one or several removable or fixed plates in the reaction room with intensive micro-mixture inside the water and the reactor wall as well as the diversion of the water flow at the reactor wall and other areas, as well as enhanced formation and growth of crystal seeds on the wall and whereas the heated water, if necessary, is maintained at higher temperature, and that the produced lime and the furrings settled under the plate(s) and on the heating surfaces or reactor wall are swirled up and carried by the water, **characterised in that** the water is heated in spaced apart sections of the reactor at time-controlled intervals and air as well as steam bubbles are disintegrated, on the one hand to enable more intensive mass transfer and on the other hand fractioned crystallisation coupled with inoculation and secondary crystallisation in less heated areas, whereas the reactor is operated in continuous, semi-continuous or discontinuous mode, and whereas the water is heated up to boiling point at normal, reduced or elevated pressure.

## Revendications

1. Réacteur pour décalcification d'eau et élimination simultanée de substances nocives, baisse de turbidité et désinfection,
- comprenant une salle de traitement avec arrivée de l'eau à traiter et sortie de l'eau traitée de même que, le cas échéant, une sortie supplémentaire pour l'évacuation des sédiments,
- avec un ou plusieurs dispositifs de chauffage, directs et/ou indirects, pour l'eau,
- plusieurs plaques horizontales, amovibles et fixes, de dérivation de l'écoulement d'eau, écartées du fond et, le cas échéant, de la paroi latérale du réacteur, **caractérisé en ce**
**que** les plaques fixes présentent un alésage en leur milieu, traversé par un système d'ouverture et de fermeture des alésages à l'aide de fermetures coniques et/ou cylindriques, l'extrémité supérieure du système étant reliée sans plaques ou bien par une ou plusieurs plaques non fixes et présentant un support, et une ou plusieurs des plaques fixes possédant des ouvertures périphériques sur le contour, et les dispositifs de chauffage direct étant répartis dans différentes sections du réacteur, et l'entrée et/ou la sortie de l'eau étant prévue dans la zone supérieure et/ou inférieure du réacteur, et une plaque ne comportant qu'un seul gros alésage au milieu étant disposée au-dessus d'une plaque comprenant des alésages plus petits en sa périphérie.

2. Réacteur selon la revendication 1, **caractérisé en ce qu'**il est composé d'acier inoxydable, de divers alliages ou d'un matériau thermorésistant.

3. Réacteur selon la revendication 1 et 2, **caractérisé en ce que** les plaques sont de forme conique.

4. Réacteur selon les revendications 1 à 3, **caractérisé en ce que** les plaques sont d'abord reliées par deux ou trois tiges puis peuvent s'introduire dans le réacteur et s'extraire de celui-ci ensemble à l'aide desdites tiges.

5. Réacteur selon les revendications 1 à 4, **caractérisé en ce qu'**un tamis est disposé sous la sortie des sédiments du réacteur pendant le traitement de l'eau.

6. Procédé de décalcification d'eau et d'élimination simultanée des substances nocives et désinfection dans un réacteur selon la revendication 1 avec entrée et sortie comprenant les phases suivantes
a) chauffage de l'eau, ce qui a pour effet de réduire la solubilité du CO2 dans l'eau et de provoquer la désorption du CO2, avec pour conséquence la nouvelle progression du pH (2 HCO3₋ -> C02 + C0₃²⁻+ H₂0),
b) Aménagement et configuration d'une ou de plusieurs plaques amovibles et fixes dans la salle de réaction avec micromélange plus intensif dans l'eau et la paroi du réacteur de même que diversion de l'écoulement d'eau contre la paroi du réacteur et d'autres zones, accélération de la formation et de la croissance de germes cristallins contre la paroi et maintien, si nécessaire, de l'eau chauffée à une température plus élevée, tandis que la chaux produite et les dépôts calcaires accumulés sous la ou les plaques et sur les surfaces de chauffage ou les parois du réacteur sont évacués par un effet de tourbillon et entraînés par l'eau, **caractérisé en ce** l'eau est chauffée dans des sections espacées du réacteur selon une séquence déterminée et que les bulles d'eau et de vapeur sont désintégrées, pour permettre d'une part un transfert de matière plus intensif et d'autre part une cristallisation fractionnée couplée à une inoculation et une cristallisation secondaire dans des zones moins chauffées, le réacteur fonctionnant en mode continu, semi-continu ou discontinu, et l'eau étant portée au point d'ébullition à une pression normale, réduite ou accrue.
